# EUROPÄISCHE PATENTSCHRIFT

(11) **EP 0 372 606 B1**
(45) Veröffentlichungstag und Bekanntmachung des Hinweises auf die Patenterteilung: **10.03.1993**
(21) Anmeldenummer: 89202917.4
(22) Anmeldetag: 17.11.1989
(51) Int. Cl.: B01D 53/36, B01J 38/72

(54) **Verfahren zum Entstauben eines Katalysators**
Process for dusting a catalyst
Procédé de dépoussiérage d'un catalyseur

(30) Priorität: 09.12.1988 DE 3841513
(43) Veröffentlichungstag der Anmeldung: 13.06.1990
(73) Patentinhaber: METALLGESELLSCHAFT Aktiengesellschaft, 60015 Frankfurt (DE)
(72) Erfinder: Wanner, Dieter, D-6237 Liederbach (DE); Schade, Horst, D-6000 Frankfurt am Main (DE)

(56) Entgegenhaltungen:
- US-A- 4 263 944

## Beschreibung

Die Erfindung bezieht sich auf ein Verfahren zum Entfernen von Staub von der Anströmfläche eines Katalysators aus keramischem Werkstoff für die Reinigung eines Gasstroms.

Bei der Abgasreinigung werden zur Minderung der Stickoxidemission u.a. im Abgaskanal fest eingebaute Katalysatoren mit Gitterstruktur eingesetzt, deren Wirksamkeit bei bestimmten Temperaturen optimal ist. Vielfach ist es nicht möglich oder unwirtschaftlich, die Abgase vor Eintritt in den Katalysatorbereich zu Entstauben. Es kommt daher zu Staubablagerungen auf der Oberfläche des Katalysators, wodurch dessen Wirksamkeit beeinträchtigt wird. Als besonders nachteilig haben sich Staubablagerungen auf den Anströmflächen der Gitterstruktur erwiesen. Hier kann es zu Brückenbildungen kommen, so daß die Gitterstruktur für den Gasstrom teilweise undurchlässig wird. Infolgedessen fallen die betroffenen Oberflächenbereiche des Katalysators für die Entstickung der Abgase aus. Außerdem erhöht sich im verbleibenden Strömungsquerschnitt die Gasgeschwindigkeit, so daß im aktiven Katalysatorteil nur noch eine entsprechend verkürzte Reaktionszeit zur Verfügung steht. Es muß also dafür gesorgt werden, daß die Staubablagerungen auf den Anströmflächen des Katalysators rechtzeitig beseitigt werden.

Da Katalysatoren aus keramischem Material keine raschen Temperaturänderungen vertragen, können zu diesem Zweck mit Druckluft betriebene Einrichtungen, wie sie für das Abreinigen von Wärmetauscherflächen in Kesselanlagen bekannt sind, nicht eingesetzt werden. Das im Gasstrom auf 300 bis 400°C oder mehr erhitzte keramische Material würde bei einer Beaufschlagung mit kalter Druckluft sofort zerstört. Aus dem Dokument EP-A-0 136 966 ist ein Verfahren zum Entfernen störender Ablagerungen auf Katalysatoren mit Hilfe von Naß- und Trockendampf bekannt. Vielfach steht aber für die Abgasreinigung kein Naß- und Trockendampf zur Verfügung. Er ist auch nicht in allen Fällen einsetzbar, weil die Abgasreinigung dadurch erschwert oder wirtschaftlich zu aufwendig werden könnte.

Im Rahmen der Reinigung eines Gasstroms besteht somit die Aufgabe, zum Entfernen von Staub von der Anströmfläche eines Katalysators aus keramischem Material ein Verfahren vorzuschlagen, bei dem einerseits das Katalysatormaterial keinem Temperaturschock ausgesetzt wird und bei dem andererseits nicht auf Dampf als Reinigungsmittel zurückgegriffen werden muß.

Überraschenderweise hat sich herausgestellt, daß diese Aufgabe zu lösen ist, wenn man beim eingangs beschriebenen Verfahren mittels einer in geringem Abstand nacheinander über die gesamte Anströmfläche des Katalysators geführten Einrichtung zusammen mit dem Staub eine kleine Menge Gas aus dem Abgasstrom absaugt. Die Einrichtung weist vorzugsweise ein Rohr mit schlitzartigem Ansatz auf, der auf die Anströmfläche gerichtet ist. Der schlitzartige Ansatz wird je nach den Gegebenheiten zweckmäßigerweise in einem Abstand von 3 bis 8 mm über die Anströmfläche des Katalysators geführt. Bei einem Gaskanal mit kreisförmigem Querschnitt ist es möglich, ein zentral in Lagern geführtes Drehrohr vorzusehen, das an seinem einen Ende in ein Absaugrohr mündet und an seinem anderen Ende mit einem sich im wesentlichen über den gesamten Durchmesser des Gaskanals erstreckenden, quer angeordneten Rohr mit schlitzartigem Ansatz verbunden ist. Dieses Drehrohr wird durch einen außerhalb des Gaskanals angeordneten Motor über eine Welle und ein aus Schnecke und Schneckenrad bestehendes Getriebe angetrieben. Das Absaugrohr steht mit einem Gebläse in Verbindung, mittels dem die abgesaugte Gasmenge einer Entstaubungseinrichtung zugeführt wird.

Zweckmäßige Ausgestaltungen des Erfindungsgedankens sind in den Unteransprüchen 7 bis 9 beschrieben.

Weitere Einzelheiten werden anhand des in den Figuren 1 bis 3 dargestellten Ausführungsbeispiels näher erläutert.
Figur 1 zeigt stark vereinfacht einen Vertikalschnitt durch einen horizontalen Gaskanal zum Absaugen von Gas.
Figur 3 zeigt in perspektivischer Darstellung die Ecke eines Katalysatorelements.

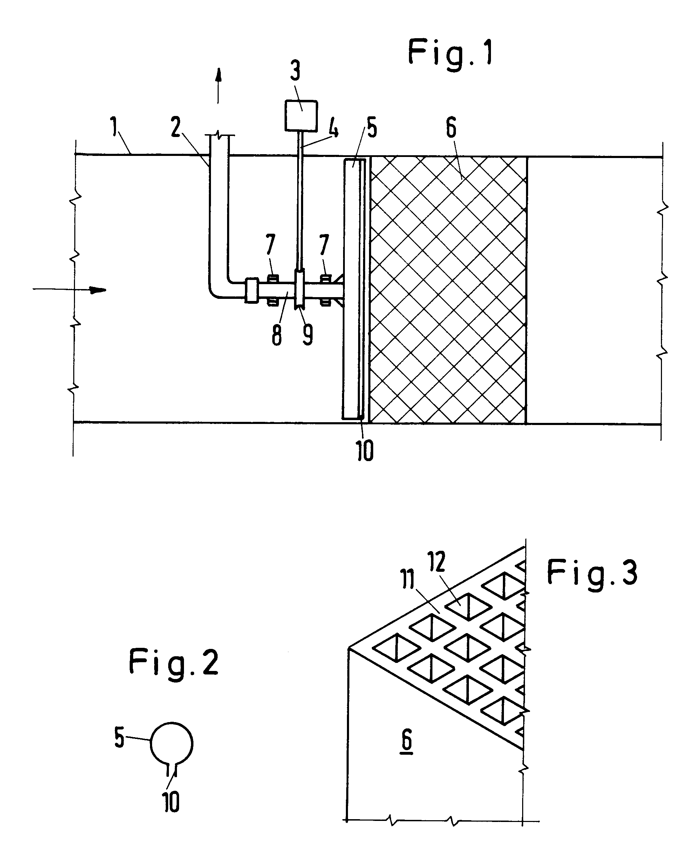

Bei der Ausführungsform gemäß Figur 1 handelt es sich um einen Gaskanal (1) mit kreisförmigem Querschnitt, in dem ein Katalysator (6) mit Gitterstruktur angeordnet ist, d.h. mit einer Vielzahl von Kanälen (12), die durch Stege (11) voneinander getrennt sind. Die Stirnflächen der Stege (11) bilden insgesamt die Anströmfläche des Katalysators (6), die senkrecht zum Gasstrom liegt und deshalb zwangsläufig Staubablagerungen verursacht. In Strömungsrichtung unmittelbar vor der Anströmfläche ist ein sich im wesentlichen über den gesamten Durchmesser des Kanals erstreckendes Rohr (5) mit schlitzartigem Ansatz (10) vorgesehen, das mit einem Drehrohr (8) verbunden ist. Das Drehrohr (8) ist in Lagern (7) drehbar gelagert und über einen Motor (3) mittels Welle (4) und ein aus Schnecke und Schneckenrad bestehendes Getriebe (9) antreibbar. Das Drehrohr (8) mündet in ein stillstehendes Absaugrohr (2), das mit einem nicht dargestellten Gebläse verbunden ist. Bei einer Drehung des Rohres (5) um die Achse des Gaskanals (1), wird nacheinander die gesamte Anströmfläche des Katalysators (6) überstrichen und der darauf abgelagerte Staub abgesaugt. Das Rohr (5) mit dem schlitzartigen Ansatz (10) weist den in Figur 2 dargestellten Querschnitt auf. Die Gitterstruktur des Katalysators (6), der Stege (11) und den Kanälen (12) ist aus Figur 3 ersichtlich.

## Patentansprüche

1. Verfahren zum Entfernen von Staub von der Anströmfläche eines in einem Abgaskanal eingebauten und in Betrieb befindlichen Katalysators (6) aus keramischem Werkstoff für die Reinigung eines Gasstroms, dadurch gekennzeichnet, daß mittels einer in geringem Abstand nacheinander über die gesamte Anströmfläche des Katalysators (6) geführten Einrichtung (5,10) zusammen mit dem Staub eine kleine Menge Gas aus dem Abgasstrom abgesaugt wird.

2. Verfahren nach Anspruch 1, dadurch gekennzeichnet, daß die Einrichtung ein Rohr (5) mit schlitzartigem Ansatz (10) aufweist, der auf die Anströmfläche gerichtet ist.

3. Verfahren nach Anspruch 2, dadurch gekennzeichnet, daß der schlitzartige Ansatz (10) im Abstand von 3 bis 8 mm über die Anströmfläche des Katalysators (6) geführt wird.

4. Verfahren nach Anspruch 3, dadurch gekennzeichnet, daß bei kreisförmigem Querschnitt des Gaskanals (1) ein zentral in Lagern (7) geführtes Drehrohr (8) verwendet wird, das an seinem einen Ende in ein Absaugrohr (2) mündet und an seinem anderen Ende mit einem sich im wesentlichen über den gesamten Durchmesser des Gaskanals (1) erstreckenden quer angeordneten Rohr (5) mit schlitzartigem Ansatz (10) verbunden ist.

5. Verfahren nach Anspruch 4, dadurch gekennzeichnet, daß das Drehrohr (8) durch einen außerhalb des Gaskanals (1) angeordneten Motor (3) über eine Welle (4) und ein aus Schnecke und Schneckenrad bestehendes Getriebe (9) angetrieben wird.

6. Verfahren nach Anspruch 5, dadurch gekennzeichnet, daß das Absaugrohr (2) mit einem Gebläse in Verbindung steht und daß die abgesaugte Gasmenge einer Entstaubungseinrichtung zugeführt wird.

7. Verfahren nach einem der Ansprüche 1 bis 6, dadurch gekennzeichnet, daß der schlitzartige Ansatz (10) einen Absaugquerschnitt besitzt, der 0,5 bis 2 % des Querschnitts vom Gaskanal beträgt.

8. Verfahren nach einem der Ansprüche 1 bis 7, dadurch gekennzeichnet, daß im Absaugquerschnitt ein Unterdruck von etwa 500 bis 3000 Pa (50 bis 300 mm WS) aufrechterhalten wird.

9. Verfahren nach einem der Ansprüche 1 bis 8, dadurch gekennzeichnet, daß die abgesaugte Gasmenge 0,5 bis 2 % der Abgasmenge beträgt.

## Claims

1. A method for removing dust from the inflow surface of a catalyst (6) made of ceramic material for purifying a stream of gas, which catalyst is installed in a waste gas duct and is in operation, characterised in that a small quantity of gas is drawn out of the stream of waste gas together with the dust by means of means (5, 10) guided at a short distance one behind another across the entire inflow surface of the catalyst (6).

2. A method according to Claim 1, characterised in that the means has a pipe (5) with a slot-like attachment (10) which is direct towards the inflow surface.

3. A method according to Claim 2, characterised in that the slot-like attachment (10) is guided across the inflow surface of the catalyst (6) at a distance of 3 to 8 mm.

4. A method according to Claim 3, characterised in that if the cross-section of the gas duct (1) is circular a rotary pipe (8) guided centrally in bearings (7) is used, which pipe opens at one end into a suction pipe (2) and is connected at its other end to a transversely arranged pipe (5) with a slot-like attachment (10) extending substantially over the entire diameter of the gas duct (1).

5. A method according to Claim 4, characterised in that the rotary pipe (8) is driven by a motor (3) located outside the gas duct (1) via a shaft (4) and a gear (9) consisting of a worm and worm wheel.

6. A method according to Claim 5, characterised in that the suction pipe (2) communicates with a fan and that the quantity of gas withdrawn is sent to a dust removal apparatus.

7. A method according to one of Claims 1 to 6, characterised in that the slot-like attachment (10) has a suction cross-section which is 0.5 to 2% of the cross-section of the gas duct.

8. A method according to one of Claims 1 to 7, characterised in that an underpressure of about 500 to 3000 Pa (50 to 300 mm water column) is maintained in the suction cross-section.

9. A process according to one of Claims 1 to 8, characterised in that the quantity of gas drawn off is 0.5 to 2% of the quantity of waste gas.

## Revendications

1. Procédé d'élimination de la poussière de la surface, sur laquelle afflue un courant gazeux à épurer, d'un catalyseur (6) en matériau céramique, monté dans un canal pour un effluent gazeux et se trouvant en fonctionnement, caractérisé en ce qu'il consiste à aspirer, en même temps que la poussière, une petite quantité du gaz du courant d'effluent gazeux au moyen d'un dispositif (5,10) guidé à faible distance successivement au-dessus de toute la surface du catalyseur (6) sur laquelle afflue le gaz.

2. Procédé suivant la revendication 1, caractérisé en ce que le dispositif comporte un tube (5) ayant une partie (10) en saillie en forme de fente et qui est dirigée sur la surface sur laquelle afflue le gaz.

3. Procédé suivant la revendication 2, caractérisé en ce qu'il consiste à guider la partie en saillie (10) en forme de fente à une distance de 3 à 8 mm sur la surface du catalyseur (6) sur laquelle afflue le gaz.

4. Procédé suivant la revendication 3, caractérisé en ce qu'il consiste à utiliser, lorsque le canal (1) pour le gaz a une section transversale circulaire, un tube tournant (8) qui est guidé au centre dans des paliers (7), qui débouche par son extrémité dans un tube d'aspiration (2) et qui communique, par son autre extrémité, avec un tube (5) à partie saillante (10) en forme de fente et disposé transversalement en s'étendant sensiblement sur tout le diamètre du canal (1) pour le gaz.

5. Procédé suivant la revendication 4, caractérisé en ce qu'il consiste à entraîner le tube tournant (8) par un moteur (3) disposé à l'extérieur du canal (1) pour le gaz par l'intermédiaire d'un arbre (4) et d'une transmission (9) constituée d'une vis et d'une roue à denture hélicoïdale.

6. Procédé suivant la revendication 5, caractérisé en ce que le tube d'aspiration (2) communique avec un ventilateur et le procédé consiste à envoyer la quantité du gaz aspiré à un dispositif de dépoussiérage.

7. Procédé suivant l'une des revendications 1 à 6, caractérisé en ce que la partie saillante (10) en forme de fente a une section transversale d'aspiration qui représente de 0, 5 à 2 % de la section transversale du canal pour le gaz.

8. Procédé suivant l'une des revendications 1 à 7, caractérisé en ce qu'il consiste à maintenir dans la section transversale d'aspiration une dépression de 500 à 3000 Pa environ (50 à 300 mm de colonne d'eau).

9. Procédé suivant l'une des revendications 1 à 8, caractérisé en ce que la quantité de gaz aspiré représente de 0,5 à 2 % de la quantité d'effluent gazeux.
